# EUROPEAN PATENT SPECIFICATION

(11) **EP 0 497 411 B1**
(45) Date of publication and mention of the grant of the patent: **20.04.1994**
(21) Application number: 92200191.2
(22) Date of filing: 23.01.1992
(51) Int. Cl.: C10M 143/12, C08F 297/04, C08F 8/04

(54) **Polymeric viscosity index improvers**
Polymerviskositätsindexverbesserer
Polymère améliorant l'indice de viscosité

(30) Priority: 28.01.1991 US 646024
(43) Date of publication of application: 05.08.1992
(73) Proprietor: SHELL INTERNATIONALE RESEARCH MAATSCHAPPIJ B.V., 2596 HR Den Haag (NL)
(72) Inventor: Rhodes, Robert Barnett, Houston, Texas 77070 (US); Atwood, Harvey Emerson, Kingwood, Texas 77345 (US)

(56) References cited:
- FR-A- 2 162 174
- US-A- 4 036 910

## Description

This invention relates to polymers, in particular hydrogenated copolymers of isoprene and a monoalkenyl aromatic hydrocarbon, useful as viscosity index improvers, a process for their preparation and oil compositions containing them.

As is well known, the viscosity of lubricating oils varies with temperature, and it is important that the oil is not too viscous (thick) at low temperatures nor too fluid (thin) at high temperatures. The variation in the viscosity-temperature relationship of an oil is indicated by the so-called viscosity index (VI). The higher the viscosity index, the less the change in viscosity with temperature. In general, the viscosity index is a function of the oil viscosity at a given lower temperature and a given higher temperature. The given lower temperature and the given higher temperature for lubricating oils have varied over the years but are fixed at any given time in an ASTM test procedure (ASTM D2270). Currently the lower temperature specified in the test is 40°C and the higher temperature specified in the test is 100°C.

The thickening efficiency of a polymeric VI improver is an important, and frequently, the principal consideration in its selection for use in oil compositions. Polymeric VI improvers which significantly increase the high temperature kinematic viscosity without appreciably increasing the low temperature kinematic viscosity are preferred. The thickening efficiency of any given polymeric VI improver will vary with polymer composition and structure but will increase with increased molecular weight. Other properties are important including the ability of the VI improver to maintain an increase in viscosity even after subjected to mechanical shear; the high temperature, high shear rate (HTHSR) viscosity response of an oil composition containing the viscosity index improver; the low temperature viscosity response of an oil containing the viscosity index improver; the engine pumpability of a lubricating oil composition containing the viscosity index improver; and the low temperature startability of an engine containing the lubricating oil composition. It should be noted that viscosity index improvers which are solid and do not exhibit cold flow are particularly preferred for ease in packaging and handling. Polymers of this type are usually, but not always, capable of being separated from solvent during manufacture by means of cyclone-finishing techniques.

US Patent No. 3,772,196 discloses block copolymers comprising a single polymeric block of a monoalkenyl aromatic hydrocarbon compound and a single polymeric block of isoprene which offer a good balance of viscosity index improver properties. However, these polymers comprise relatively high monoalkenyl aromatic hydrocarbon contents which give lower HTHSR responses than polymers having similar molecular weights and lower monoalkenyl aromatic hydrocarbon contents.

A viscosity index improver having a relatively small amount of monoalkenyl aromatic hydrocarbon is disclosed in US Patent No. 3,775,329 which describes tapered copolymers of isoprene and monoalkenyl aromatic hydrocarbon monomers. Although US Patent No. 3,775,239 excludes the use of randomizers, it is asserted that the tapered copolymers do not have significant homopolymer blocks of isoprene or of the monoalkenyl aromatic hydrocarbons. The VI improvers described include non-cyclone finishable VI improvers, VI improvers which provide relatively low HTHSR responses in multigrade oils, and VI improvers with low thickening efficiencies.

US Patent No. 4,418,234 describes diene block copolymers which have high vinyl contents and provide good high shear rate responses. For any molecular weight, an increase in vinyl content lowers the thickening efficiency of the VI improver. In US Patent No. 4,418,234, it is asserted that randomizers can be used as long as the total amount of homopolymer blocks of monoalkenyl aromatic hydrocarbon is less than about 5 per cent by weight, preferably less than about 2 per cent by weight.

In accordance with the present invention, there is provided a cyclone-finishable polymeric viscosity index improver produced by the process comprising the steps of:
(a) preparing by anionic polymerisation a copolymer having a number average molecular weight in the range from 125,000 to 275,000, an isoprene content from 90 to 98 per cent by weight, wherein at least 85%, preferably at least 93%, of the isoprene units have a 1,4-configuration, and a monoalkenyl aromatic hydrocarbon content from 10 to 2 per cent by weight; and comprising a block structure A-A/B wherein A is a homopolymer block of the isoprene and A/B is a copolymer block of the isoprene and the monoalkenyl aromatic hydrocarbon, the homopolymer block A comprising at least 60% of the copolymer by weight; and
(b) hydrogenating at least 95%, preferably at least 98%, of the isoprene and at least 5% of the monoalkenyl aromatic hydrocarbon.

The hydrogenated copolymers of this invention are cyclone-finishable as a solid polymer crumb and do not exhibit cold flow. Oil compositions containing the hydrogenated copolymers have a good balance between high temperature, high shear rate viscosity response; low temperature viscometric response; engine oil pumpability and low temperature startability.

The present invention further provides a process for the preparation of a cyclone-finishable polymeric viscosity index improver according to the present invention, comprising the steps of:
(a) anionically polymerising isoprene and a monoalkenyl aromatic hydrocarbon to produce a copolymer having a number average molecular weight in the range from 125,000 to 275,000, an isoprene content from 90 to 98 per cent by weight, wherein at least 85% of the isoprene units have a 1,4-configuration, and a monoalkenyl aromatic hydrocarbon content from 10 to 2 per cent by weight; and comprising a block structure A-A/B wherein A is a homopolymer block of the isoprene and A/B is a copolymer block of the isoprene and the monoalkenyl aromatic hydrocarbon, the homopolymer block A comprising at least 60% of the copolymer by weight; and
(b) hydrogenating at least 95% of the isoprene and at least 5% of the monoalkenyl aromatic hydrocarbon.

The copolymer may be prepared in at least two different ways. The polymerisation may be completed by placing a desired amount of isoprene into a reaction vessel and, after polymerising 60 to 90% of the isoprene as a homopolymer block, the desired amount of monoalkenyl aromatic hydrocarbon monomer may then be added. In the absence of a randomizing agent, the mixture of isoprene and monoalkenyl aromatic hydrocarbon adds a tapered copolymer block to the initial isoprene block. Process conditions for making tapered copolymer blocks are the same as for making tapered copolymers as described in US Patent No. 3,775,329. Alternatively, polymerisation may be initiated by placing the amount of isoprene to be incorporated into the isoprene homopolymer block in a reaction vessel and allowing the isoprene to react to substantial completion before adding isoprene and monoalkenyl aromatic hydrocarbon monomer in the absence of randomizing agents to polymerise the copolymer block. In either case, addition of the monoalkenyl aromatic hydrocarbon late in the polymerisation results in a large homopolymer block of isoprene connected to a copolymer block having sufficient segments of the monoalkenyl aromatic hydrocarbon to be cyclone-finishable. Hydrogenated copolymers having higher total molecular weights generally require smaller amounts of the monoalkenyl aromatic hydrocarbon to be cyclone-finishable as a polymer crumb.

Prior to hydrogenation, the copolymers have a number average molecular weight in the range from 125,000 to 275,000, preferably from 150,000 to 240,000. The hydrogenated isoprene homopolymer blocks have a number average molecular weight in the range from 75,000 to 250,000, preferably from 90,000 to 225,000. Molecular weight as used herein is the molecular weight as determined from the peak value using Gel Permeation Chromatography (GPC) techniques.

US Patent No. 3,772,196 discloses the use of an organo metallic compound, particularly lithium compounds, to prepare isoprene polymers having high 1,4 contents and these compounds are particularly preferred for use in preparing the viscosity index improver according to the present invention. Suitable organo metallic compounds containing one or more lithium atoms include, generally, compounds satisfying the general formula RLiₙ wherein n may be 1 or 2. Suitable organo metallic compounds containing a single lithium atom which are useful in preparing the viscosity index improver of the present invention include compounds wherein R is unsaturated such as allyl lithium or methallyl lithium; compounds wherein R is aromatic such as phenyl lithium, tolyl lithium, zyllyl lithium or naphthyl lithium; and compounds wherein R is an alkyl moiety such as methyl lithium, ethyl lithium, propyl lithium, butyl lithium, amyl lithium, hexyl lithium, 2-ethylhexyl lithium or n-hexadecyl lithium. Secondary-butyl lithium is a most preferred initiator for use in preparing the VI improver of the present invention.

The polymerisation of the isoprene and monoalkenyl aromatic hydrocarbon monomers to produce the copolymer will be completed in a suitable solvent useful in the preparation of block copolymers containing a conjugated diolefin and a monoalkenyl aromatic hydrocarbon monomer. Suitable solvents include hydrocarbon solvents, e.g. paraffins, cycloparaffins, alkyl substituted cycloparaffins, aromatics and alkyl-substituted aromatics containing from 4 to 10 carbon atoms per molecule, benzene, toluene, cyclohexane, methylcyclohexane, n-butane, n-hexane and n-heptane. Cyclohexane is preferred.

Suitable monoalkenyl aromatic hydrocarbon monomers useful for preparing the VI improvers of this invention include styrene, alkyl-substituted styrenes, alkoxy-substituted styrenes, vinyl naphthalene and alkyl-substituted vinyl naphthalenes. Styrene is particularly preferred.

Preparation of the copolymer may be completed at a temperature in the range from 20°C to 100°C, preferably from 50°C to 70°C. The polymerisation reaction is carried out in an inert atmosphere, preferably under a nitrogen blanket, and the polymerisation will be carried out, generally, under pressure, for example, at a pressure in the range from 0.5 to 10 bar (50 to 1000 kpa). The concentration of initiator during the polymerisation may vary over a relatively wide range but will be controlled in combination with the monomer concentration so as to produce blocks within the copolymer having the desired molecular weight.

The copolymer is then hydrogenated at conditions sufficient to hydrogenate at least 95% of the isoprene units and at least 5% of the monoalkenyl aromatic hydrocarbon units. Preferably, from 10% to 30%, more preferably from 10% to 20%, of aromatic unsaturation is hydrogenated. Hydrogenation at these levels is very reproducible for copolymers having from 10 to 2 per cent by weight of monoalkenyl aromatic hydrocarbon units as determined by Nuclear Magnetic Resonance (NMR) integration of the aromatic protons. It has been found, however, that hydrogenation of more than 35% of the aromatic unsaturation yields hydrogenated copolymers which are not cyclone-finishable as a polymer crumb.

A particularly preferred method for selectively hydrogenating the copolymer is described in US Patent No. 3,700,633. In the process of US Patent No. 3,700,633, hydrogenation of the block copolymer is accomplished in the same solvent as was used during the polymerisation using a hydrogenation catalyst comprising the reaction product of an aluminum alkyl and a nickel or cobalt carboxylate or alkoxide. In general, hydrogenation is accomplished at a temperature in the range from 25°C to 175°C at a hydrogen partial pressure of at least 50 psig (344.74 kPa), and usually at a hydrogen partial pressure in the range from 250 to 1500 psig (1723.69 to 10,342.14 kPa). In general, contacting times in the range from 5 minutes to 8 hours will be sufficient to permit the desired degree of hydrogenation. The (selectively) hydrogenated copolymer is recoverable as a polymer crumb using known techniques.

The present invention further provides an oil composition comprising a major proportion of an oil and a minor proportion of a polymeric viscosity index improver in accordance with the present invention. For example, the (selectively) hydrogenated copolymer of this invention may be added to a variety of oils including crude oil, mineral and synthetic oils, lubricating oils, diesel oils, hydraulic oils and automatic transmission oils. In general, the concentration of the (selectively) hydrogenated copolymer in such oils may vary between wide limits with amounts in the range from 0.2 to 3 weight per cent being most common. Concentrations in the range from 0.4 to 2 weight per cent are preferred and concentrations in the range from 0.5 to 1.5 weight per cent are most preferred. Lubricating oil compositions prepared with the (selectively) hydrogenated copolymer of this invention may also contain other additives such as anti-corrosive additives, anti-oxidants, detergents, pour point depressants,
anti-wear/extreme-pressure agents and one or more additional VI improvers. Typical additives which are useful in the lubricating oil compositions of this invention are those described in, e.g. US Patent Nos. 3,772,196 and 3,835,083.

The preferred viscosity index improver prior to hydrogenation has the structure A-(A/B)-B wherein the number average molecular weight of the copolymer is in the range from 150,000 to 240,000, the monoalkenyl aromatic hydrocarbon, preferably styrene, content is from 7 to 3 per cent by weight, the homopolymer block A of isoprene comprises at least 75% of the copolymer by weight, and B is a homopolymer block of the monoalkenyl aromatic hydrocarbon, preferably styrene, having a number average molecular weight of at least 4,000, most preferably at least 6,000.

The preferred copolymers are prepared by anionic polymerisation in a cyclohexane solution until the solution contains 15 to 50 weight per cent of the copolymer. Polymerisation occurs under a nitrogen blanket at a nitrogen partial pressure in the range from 0.5 to 2 bar (50 to 200 kPa).

After the polymerisation reaction is completed, the preferred copolymers are hydrogenated in the presence of a catalyst prepared by combining triethyl aluminium and nickel 2-ethylhexanoate. The hydrogenation will most preferably reduce the unsaturation of the isoprene to less than 2% of the ethylenic unsaturation originally contained in the copolymer and saturate from 10% to 30% of the monoalkenyl aromatic hydrocarbon to give a total monoalkenyl aromatic hydrocarbon content from 6 to 4 per cent by weight for hydrogenated copolymers having a number average molecular weight in the range from 190,000 to 210,000.

The invention will be further understood from the following illustrative examples, in which Examples 1 to 6 are examples according to the present invention and Examples 7 to 9 are comparative examples.

In the examples which follow, and elsewhere in this specification, unless otherwise indicated, percentages are percentages by weight.

### Example 1

Living isoprene blocks were prepared by anionically polymerising about 85% of an initial charge of 67.39 lbs (30.57 kg) of isoprene in cyclohexane. The polymerisation reaction was promoted by sec-butyllithium in the absence of any randomizing compounds. The living isoprene blocks had at least 93% 1,4-polymerised isoprene units. Polymerisation continued after the addition of 4.64 lbs (2.1 kg) of styrene until the number average molecular weight of the copolymer was 189,100 as measured by GPC. The copolymer had a polystyrene content of 6.5% by NMR and a total molecular weight of the terminal polystyrene blocks of 7,800 as measured by GPC on the solid material recovered after ozone degradation of the copolymer prior to hydrogenation.

The copolymer was hydrogenated with a catalyst composition comprising nickel and triethyl aluminum with Al/Ni ratio from 2.1 to 2.5. The catalyst composition was prepared as a masterbatch and used for all of the examples. Hydrogenation also reduced the polystyrene content to 5.1%. The hydrogenated copolymer was recovered as a solid polymer crumb which did not exhibit cold flow.

The hydrogenated copolymer was added to an oil composition which contained 9.1% by weight of an experimental additive package, 0.3% Hitec 623 (Trade Mark) which is a pour point depressant, and the balance was HVI 100N oil, a bright and clear high viscosity index base oil having viscosity at 40°C of 20.0 to 21.0 mm²/s (ASTM D445), viscosity index of 88 to 93 (ASTM D2270) and minimum flash point of 190.6 to 196°C (ASTM D92). The oil composition contained an amount of the hydrogenated copolymer effective to give a kinematic viscosity of 11 centistokes (11 mm²/s) at 100°C and a SAE grade of 5W-30.

The hydrogenated copolymer was also added to oil compositions which contained 31% by weight HVI 250N (DP) oil (a bright and clear high viscosity index base oil having viscosity at 40°C of 50.7 to 51.5 mm²/s (ASTM D445), viscosity index of 89 to 92 (ASTM D2270) and minimum flash point of 221°C (ASTM D92)), 7.75% by weight of an additive package sold as Lubrizol 7573A (Trade Mark), 0.3% Acryloid 160 (Trade Mark) pour point depressant, and the balance was HVI 100N oil. The oil composition contained an amount of the hydrogenated copolymer effective to give a kinematic viscosity of 14 centistokes (14 mm²/s) at 100°C and an SAE grade of 10W-40.

The low temperature viscosity of the oil compositions were measured according to ASTM D-4684 and the results are reported in the following Table for comparison with subsequent examples.

### Example 2

Living isoprene blocks were prepared by anionically polymerising about 85% of an initial charge of 14.76 lbs (6.7 kg) of isoprene in cyclohexane. The polymerisation reaction was promoted by sec-butyllithium in the absence of any randomizing compounds. The living isoprene blocks had at least 93% 1,4-polymerised isoprene units. Polymerisation continued after the addition of 1.02 lbs (0.46 kg) of styrene until the number average molecular weight of the copolymer was 201,400. The copolymer had a polystyrene content of 6.2% by NMR and a total molecular weight of 9,100 as measured by GPC according to Example 1.

The copolymer was hydrogenated as described for Example 1. Hydrogenation reduced the polystyrene content to 5.4%. The hydrogenated copolymer was recovered as a solid polymer crumb which did not exhibit cold flow.

The hydrogenated copolymer was added to oil compositions as described in Example 1. The low temperature viscosity of the oil compositions were measured according to ASTM D-4684 and the results are reported in the following Table.

### Example 3

Living isoprene blocks were prepared by anionically polymerising about 85% of an initial charge of 18.71 lbs (8.49 kg) of isoprene in cyclohexane. The polymerisation reaction was promoted by sec-butyllithium in the absence of any randomizing compounds. The living isoprene blocks had at least 93% 1,4-polymerised isoprene units. Polymerisation continued after the addition of 1.27 lbs (0.58 kg) of styrene until the number average molecular weight of the copolymer was 231,000. The copolymer had a polystyrene content of 6.4% and the total molecular weight of block polystyrene was 10,800 as measured by GPC prior to hydrogenation according to Example 1.

The copolymer was hydrogenated as described for Example 1. Hydrogenation reduced the polystyrene content to 4.5%. The hydrogenated copolymer was recovered as a solid polymer crumb which did not exhibit cold flow.

The hydrogenated copolymer was added to oil compositions as described in Example 1. The low temperature viscosity of the oil compositions were measured according to ASTM D-4684 and the results are reported in the following Table.

### Example 4

Living isoprene blocks were prepared by anionically polymerising about 85% of an initial charge of 56.20 lbs (25.49 kg) of isoprene in cyclohexane. The polymerisation reaction was promoted by sec-butyllithium in the absence of any randomizing compounds. The living isoprene blocks had at least 93% 1,4-polymerised isoprene units. Polymerisation continued after the addition of 3.89 lbs (1.76 kg) of styrene until the number average molecular weight of the copolymer was 262,400. The copolymer had a polystyrene content of 6.3% and the total molecular weight of block polystyrene was 9,900 as measured by GPC prior to hydrogenation according to Example 1.

The copolymer was hydrogenated as described for Example 1 although the extent of hydrogenation was not measured. The hydrogenated copolymer was recovered as a solid polymer crumb which did not exhibit cold flow.

The hydrogenated copolymer was added to oil compositions as described in Example 1. The low temperature viscosity of the oil compositions were measured according to ASTM D-4684 and the results are reported in the following Table.

### Example 5

Living isoprene blocks were prepared by anionically polymerising about 85% of an initial charge of 15.44 lbs (7.0 kg) of isoprene in cyclohexane. The polymerisation reaction was promoted by sec-butyllithium in the absence of any randomizing compounds. The living isoprene blocks had at least 93% 1,4-polymerised isoprene units. Polymerisation continued after the addition of 1.060 lbs (0.48 kg) of styrene until the number average molecular weight of the copolymer was 204,800. The copolymer had a polystyrene content of 6.8% and the total molecular weight of block polystyrene was 10,200 as measured by GPC prior to hydrogenation according to Example 1.

The copolymer was hydrogenated as described for Example 1. Hydrogenation reduced the polystyrene content to 5.8%. The hydrogenated copolymer was recovered as a solid polymer crumb which did not exhibit cold flow.

The hydrogenated copolymer was added to oil compositions as described in Example 1. The low temperature viscosity of the oil compositions were measured according to ASTM D-4684 and the results are reported in the following Table.

### Example 6

Living isoprene blocks were prepared by anionically polymerising about 85% of an initial charge of 13.66 lbs (6.2 kg) of isoprene in cyclohexane. The polymerisation reaction was promoted by sec-butyllithium in the absence of any randomizing compounds. The living isoprene blocks had at least 93% 1,4-polymerised isoprene units. Polymerisation continued after the addition of 0.97 lb (0.44 kg) of styrene until the number average molecular weight of the copolymer was 216,400. The copolymer had a polystyrene content of 6.9% and the total molecular weight of block polystyrene was 11,300 as measured by GPC prior to hydrogenation according to Example 1.

The copolymer was hydrogenated as described for Example 1. Hydrogenation reduced the polystyrene content to 6.5%. The hydrogenated copolymer was recovered as a solid polymer crumb which did not exhibit cold flow.

The hydrogenated copolymer was added to oil compositions as described in Example 1. The low temperature viscosity of the oil compositions were measured according to ASTM D-4684 and the results are reported in the following Table.

### Example 7 (Comparison)

Living isoprene blocks were prepared by anionically polymerising about 85% of an initial charge of 18.76 lbs (8.51 kg) of isoprene in cyclohexane. The polymerisation reaction was promoted by sec-butyllithium in the absence of any randomizing compounds. The living isoprene blocks had at least 93% 1,4-polymerised isoprene units. Polymerisation continued after the addition of 1.28 lbs (0.58 kg) of styrene until the number average molecular weight of the copolymer was 181,200. The copolymer had a polystyrene content of 5.6% and the molecular weight of block polystyrene was 7,100 as measured by GPC prior to hydrogenation according to Example 1.

The copolymer was hydrogenated as described for Example 1. Hydrogenation reduced the polystyrene content to 3.6%. The hydrogenated copolymer was not cyclone-finishable as a polymer crumb.

The hydrogenated copolymer was added to oil compositions as described in Example 1. The low temperature viscosity of the oil compositions were measured according to ASTM D-4684 and the results are reported in the following Table.

### Example 8 (Comparison)

Living isoprene blocks were prepared by anionically polymerising about 100% of an initial charge of 14.04 lbs (6.37 kg) of isoprene in cyclohexane. The polymerisation reaction was promoted by sec-butyllithium in the absence of any randomizing compounds. The living isoprene blocks had at least 93% 1,4-polymerised isoprene units. Polymerisation continued after the addition of 0.97 lb (0.44 kg) of styrene until the number average molecular weight of the copolymer was 189,700. The copolymer had a polystyrene content of 6.4% and a polystyrene block having a molecular weight of 13,300 as measured by standard GPC prior to hydrogenation.

The copolymer was hydrogenated as described for Example 1. Hydrogenation reduced the polystyrene content to 6.2%. The hydrogenated copolymer was recovered as a solid polymer crumb which did not exhibit cold flow.

The hydrogenated copolymer was added to oil compositions as described in Example 1. The low temperature viscosity of the oil compositions were measured according to ASTM D-4684 and the results are reported in the following Table.

### Example 9 (Comparison)

Living isoprene blocks were prepared by anionically polymerising about 100% of an initial charge of 28.50 lbs (12.93 kg) of isoprene in cyclohexane. The polymerisation reaction was promoted by sec-butyllithium in the absence of any randomizing compounds. The living isoprene blocks had at least 93% 1,4-polymerised isoprene units. Polymerisation continued after the addition of 1.50 lbs (0.68 kg) of styrene until the number average molecular weight of the copolymer was 207,000. The copolymer had a polystyrene content of 5.9% and a polystyrene block having a molecular weight of 14,000 as measured by standard GPC prior to hydrogenation.

The copolymer was hydrogenated as described in Example 1 although the extent of hydrogenation was not determined. The hydrogenated copolymer was cyclone-finishable as a polymer crumb which did not exhibit cold flow.

The hydrogenated copolymer was added to oil compositions as described in Example 1. The low temperature viscosity of the oil compositions were measured according to ASTM D-4684 and the results are reported in the following Table.

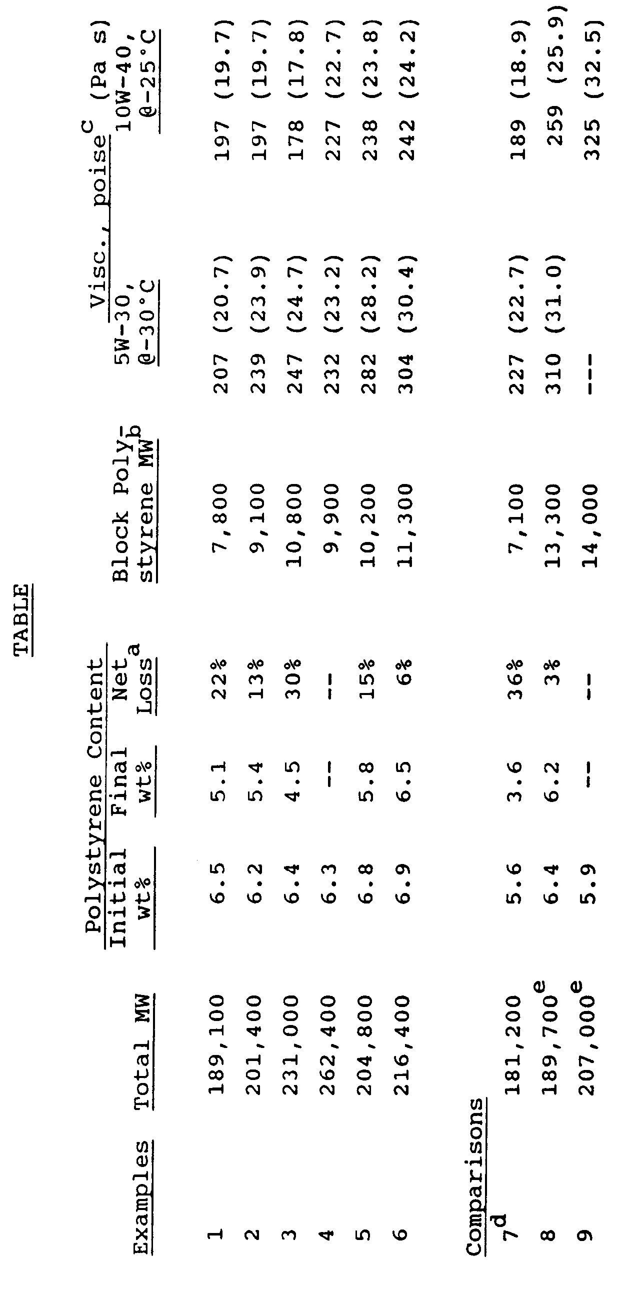

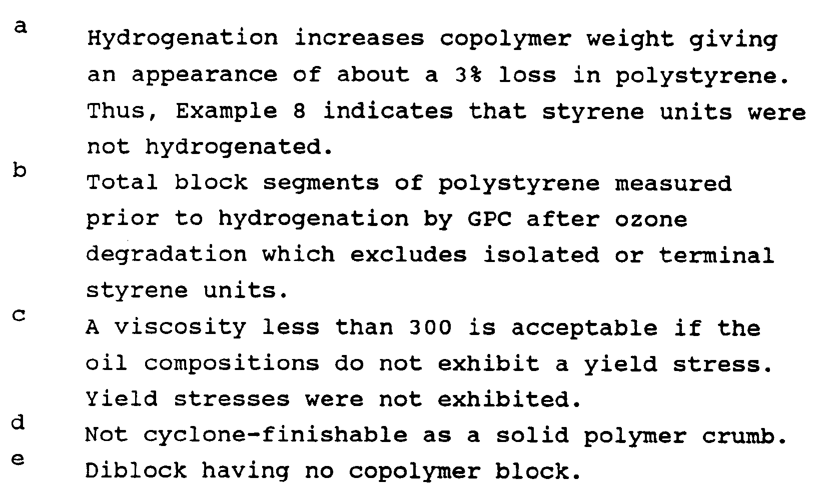

Examples 1-6 exemplify sufficient hydrogenation of the preferred A-(A/B)-B copolymers to provide both cyclone-finishability and good low temperature viscosity. Comparative Example 7 represents a hydrogenated A-(A/B)-B copolymer having too few polystyrene segments, as a result of too many hydrogenated styrene units (about 36%), to be cyclone-finishable as a solid polymer crumb.

Acceptable low temperature viscosities for modern engines are less than 300 poise (30 Pa s) with lower values being preferred. Examples 1 and 3 exhibited the lowest viscosity for a 5W-30 oil and a 10W-40 oil with respect to the hydrogenated copolymers of this invention. Although Example 6 had a viscosity marginally higher than 300 poise (30 Pa s) for a 5W-30 oil, it had a viscosity significantly lower than 300 poise (30 Pa s) for a 10W-40 oil. Comparative Example 7 yielded a low viscosity for a 10W-40 oil, but the hydrogenated copolymer could not be cyclone-finished as a solid polymer crumb as previously stated. Comparative Examples 8 and 9 establish that larger amounts of polystyrene in the hydrogenated copolymers leads to excessive low temperature viscosities.

## Claims (Claims for the following Contracting State(s): BE, DE, FR, GB, IT, NL)

1. A cyclone-finishable polymeric viscosity index improver, produced by the process comprising the steps of:
(a) preparing by anionic polymerisation a copolymer having a number average molecular weight in the range from 125,000 to 275,000, an isoprene content from 90 to 98 per cent by weight, wherein at least 85% of the isoprene units have a 1,4-configuration, and a monoalkenyl aromatic hydrocarbon content from 10 to 2 per cent by weight; and comprising a block structure A-A/B wherein A is a homopolymer block of the isoprene and A/B is a copolymer block of the isoprene and the monoalkenyl aromatic hydrocarbon, the homopolymer block A comprising at least 60% of the copolymer by weight; and
(b) hydrogenating at least 95% of the isoprene and at least 5% of the monoalkenyl aromatic hydrocarbon.

2. A viscosity index improver according to claim 1, wherein from 10% to 30% of the monoalkenyl aromatic hydrocarbon is hydrogenated.

3. A viscosity index improver according to claim 1 or claim 2, wherein, after hydrogenation, the homopolymer block A has a number average molecular weight in the range from 90,000 to 225,000.

4. A viscosity index improver according to any one of claims 1 to 3, wherein, prior to hydrogenation, the copolymer has the structure A-(A/B)-B wherein the copolymer has a number average molecular weight in the range from 150,000 to 240,000, the isoprene content is from 93 to 97 per cent by weight, the monoalkenyl aromatic hydrocarbon content is from 7 to 3 per cent by weight, the homopolymer block A comprises at least 75% of the copolymer by weight, and B is a homopolymer block of the monoalkenyl aromatic hydrocarbon having a number average molecular weight of at least 4,000, preferably at least 6,000.

5. A viscosity index improver according to claim 4, wherein, after hydrogenation, the copolymer has a number average molecular weight in the range from 190,000 to 210,000 and the monoalkenyl aromatic hydrocarbon content is from 6 to 4 per cent by weight.

6. A viscosity index improver according to any one of the preceding claims, wherein the monoalkenyl aromatic hydrocarbon is styrene.

7. A viscosity index improver according to any one of the preceding claims, wherein at least 93% of the isoprene units have the 1,4- configuration.

8. A viscosity index improver according to any one of the preceding claims, wherein at least 98% of the isoprene is hydrogenated.

9. A process for the preparation of a cyclone-finishable polymeric viscosity index improver as claimed in any one of claims 1 to 8, comprising the steps of:
(a) anionically polymerising isoprene and a monoalkenyl aromatic hydrocarbon to produce a copolymer having a number average molecular weight in the range from 125,000 to 275,000, an isoprene content from 90 to 98 per cent by weight, wherein at least 85% of the isoprene units have a 1,4-configuration, and a monoalkenyl aromatic hydrocarbon content from 10 to 2 per cent by weight; and comprising a block structure A-A/B wherein A is a homopolymer block of the isoprene and A/B is a copolymer block of the isoprene and the monoalkenyl aromatic hydrocarbon, the homopolymer block A comprising at least 60% of the copolymer by weight; and
(b) hydrogenating at least 95% of the isoprene and at least 5% of the monoalkenyl aromatic hydrocarbon.

10. An oil composition comprising a major proportion of an oil and a minor proportion of a polymeric viscosity index improver as claimed in any one of claims 1 to 8.

## Claims (Claims for the following Contracting State(s): ES)

1. A process for the preparation of a cyclone- finishable polymeric viscosity index improver, comprising the steps of:
(a) anionically polymerising isoprene and a monoalkenyl aromatic hydrocarbon to produce a copolymer having a number average molecular weight in the range from 125,000 to 275,000, an isoprene content from 90 to 98 per cent by weight, wherein at least 85% of the isoprene units have a 1,4-configuration, and a monoalkenyl aromatic hydrocarbon content from 10 to 2 per cent by weight; and comprising a block structure A-A/B wherein A is a homopolymer block of the isoprene and A/B is a copolymer block of the isoprene and the monoalkenyl aromatic hydrocarbon, the homopolymer block A comprising at least 60% of the copolymer by weight; and
(b) hydrogenating at least 95% of the isoprene and at least 5% of the monoalkenyl aromatic hydrocarbon.

2. A process according to claim 1, wherein from 10% to 30% of the monoalkenyl aromatic hydrocarbon is hydrogenated.

3. A process according to claim 1 or claim 2, wherein, after hydrogenation, the homopolymer block A has a number average molecular weight in the range from 90,000 to 225,000.

4. A process according to any one of claims 1 to 3, wherein, prior to hydrogenation, the copolymer has the structure A-(A/B)-B wherein the copolymer has a number average molecular weight in the range from 150,000 to 240,000, the isoprene content is from 93 to 97 per cent by weight, the monoalkenyl aromatic hydrocarbon content is from 7 to 3 per cent by weight, the homopolymer block A comprises at least 75% of the copolymer by weight, and B is a homopolymer block of the monoalkenyl aromatic hydrocarbon having a number average molecular weight of at least 4,000, preferably at least 6,000.

5. A process according to claim 4, wherein, after hydrogenation, the copolymer has a number average molecular weight in the range from 190,000 to 210,000 and the monoalkenyl aromatic hydrocarbon content is from 6 to 4 per cent by weight.

6. A process according to any one of the preceding claims, wherein the monoalkenyl aromatic hydrocarbon is styrene.

7. A process according to any one of the preceding claims, wherein at least 93% of the isoprene units have the 1,4- configuration.

8. A process according to any one of the preceding claims, wherein at least 98% of the isoprene is hydrogenated.

9. A process for the preparation of an oil composition which comprises mixing a major proportion of an oil and a minor proportion of a polymeric viscosity index improver prepared by a process as claimed in any one of claims 1 to 8.

## Patentansprüche (Patentansprüche für folgende(n) Vertragsstaat(en): BE, DE, FR, GB, IT, NL)

1. Ein polymeres Viskositätsindex-Verbesserungsmittel, das in einem Zyklon-Finishing-Verfahren bearbeitet werden kann, hergestellt durch das Verfahren, umfassend die Schritte:
(a) Herstellen durch anionisches Polymerisieren eines Copolymers mit einem durchschnittlichem Molekulargewicht (Zahlenmittel) im Bereich von 125000 bis 275000, einem Isoprengehalt von 90 bis 98 Gewichtsprozent, wobei mindestens 85% der Isopreneinheiten eine 1,4-Konfiguration aufweisen, und einem Gehalt an monoalkenylaromatischem Kohlenwasserstoff von 10 bis 2 Gewichtsprozent; und mit einer Blockstruktur A-A/B, wobei A ein Homopolymerblock des Isoprens und A/B ein Copolymerblock des Isoprens und des monoalkenylaromatischen Kohlenwasserstoffs ist, wobei der Homopolymerblock A mindestens 60 Gewichtsprozent des Copolymers umfaßt; und
(b) Hydrieren von mindestens 95% des Isoprens und mindestens 5% des monoalkenylaromatischen Kohlenwasserstoffs.

2. Ein Viskositätsindex-Verbesserungsmittel nach Anspruch 1, in welchem 10 bis 30% des monoalkenylaromatischen Kohlenwasserstoffs hydriert worden sind.

3. Ein Viskositätsindex-Verbesserungsmittel nach Anspruch 1 oder 2, wobei der Homopolymerblock A nach dem Hydrieren ein durchschnittliches Molekulargewicht im Bereich von 90000 bis 225000 aufweist.

4. Ein Viskositätsindex-Verbesserungsmittel nach irgendeinem der Ansprüche 1 bis 3, wobei das Copolymer vor dem Hydrieren die Struktur A-(A/B)-B aufweist, wobei das Copolymer ein durchschnittliches Molekulargewicht (Zahlenmittel) im Bereich von 150000 bis 240000 aufweist, der Isoprengehalt 93 bis 97 Gewichtsprozent beträgt, der Gehalt an monoalkenylaromatischem Kohlenwasserstoff 7 bis 3 Gewichtsprozent beträgt, der Homopolymerblock A mindestens 75 Gewichtsprozent des Copolymers umfaßt, und B ein Homopolymerblock des monoalkenylaromatischen Kohlenwasserstoffs mit einem durchschnittlichen Molekulargewicht (Zahlenmittel) von mindestens 4000, vorzugsweise mindestens 6000, ist.

5. Ein Viskositätsindex-Verbesserungsmittel nach Anspruch 4, wobei das Copolymer nach dem Hydrieren ein durchschnittliches Molekulargewicht (Zahlenmittel ) im Bereich von 190000 bis 210000 aufweist und der Gehalt an monoalkenylaromatischem Kohlenwasserstoff 6 bis 4 Gewichtsprozent beträgt.

6. Ein Viskositätsindexverbesserungsmittel nach einem der vorstehenden Ansprüche, wobei der monoalkenylaromatische Kohlenwasserstoff Styrol ist.

7. Ein Viskositätsindexverbesserungsmittel nach einem der vorstehenden Ansprüche, wobei mindestens 93% der Isopreneinheiten eine 1,4-Konfiguration haben.

8. Ein Viskositätsindexverbesserungsmittel nach einem der vorstehenden Ansprüche, wobei mindestens 98% des Isoprens hydriert worden sind.

9. Ein Verfahren zur Herstellung eines polymeren Viskositätsindex-Verbesserungsmittel, das in einem Zyklon-Finishing-Verfahren bearbeitet werden kann, wie in einem der Ansprüche 1 bis 8 beansprucht, umfassend die folgenden Verfahrensschritte:
(a) anionisches Polymerisieren von Isopren und von einem monoalkenylaromatischen Kohlenwasserstoff zwecks Herstellung eines Copolymers mit einem durchschnittlichen Molekulargewicht (Zahlenmittel) im Bereich von 125000 bis 275000, einem Isoprengehalt von 90 bis 98 Gewichtsprozent, wobei mindestens 85% der Isopreneinheiten eine 1,4-Konfiguration aufweisen, und einem Gehalt an monoalkenylaromatischem Kohlenwasserstoff von 10 bis 2 Gewichtsprozent; und mit einer Blockstruktur A-A/B, wobei A ein Homopolymerblock des Isoprens und A/B ein Copolymerblock des Isoprens und des monoalkenylaromatischen Kohlenwasserstoffs ist, und wobei der Homopolymerblock A mindestens 60 Gewichtsprozent des Copolymers umfaßt; und
b) Hydrieren von mindestens 95% des Isoprens und von mindestens 5% des monoalkenylaromatischen Kohlenwasserstoffs.

10. Eine Ölzusammensetzung, umfassend einen größeren Anteil eines Öls und einen kleineren Anteil eines polymeren Viskositätsindex-Verbesserungsmittels, wie in einem der Ansprüche 1 bis 8 beansprucht.

## Patentansprüche (Patentansprüche für folgende(n) Vertragsstaat(en): ES)

1. Ein Verfahren zur Herstellung eines polymeren Viskositätsindex-Verbesserungsmittels, das in einem Zyklo-Finishing-Verfahren bearbeitet werden kann, umfassend die folgenden Verfahrensschritte:
(a) anionisches Polymerisieren von Isopren und von einem monoalkenylaromatischen Kohlenwasserstoff zwecks Herstellung eines Copolymers mit einem durchschnittlichen Molekulargewicht (Zahlenmittel) im Bereich von 125000 bis 275000, einem Isoprengehalt von 90 bis 98 Gewichtsprozent, wobei mindestens 85% der Isopreneinheiten eine 1,4-Konfiguration aufweisen, und einem Gehalt an monoalkenylaromatischem Kohlenwasserstoff von 10 bis 2 Gewichtsprozent; und mit einer Blockstruktur A-A/B, wobei A ein Homopolymerblock des Isoprens und A/B ein Copolymerblock des Isoprens und des monoalkenylaromatischen Kohlenwasserstoffs ist, und wobei der Homopolymerblock A mindestens 60 Gewichtsprozent des Copolymers umfaßt; und
b) Hydrieren von mindestens 95% des Isoprens und von mindestens 5% des monoalkenylaromatischen Kohlenwasserstoffs.

2. Ein Verfahren nach Anspruch 1, in welchem 10 bis 30% des monoalkenylaromatischen Kohlenwasserstoffs hydriert werden.

3. Ein Verfahren nach Anspruch 1 oder 2, in welchem nach dem Hydrieren der Homopolymerblock A ein durchschnittliches Molekulargewicht (Zahlenmittel) im Bereich von 90000 bis 225000 aufweist.

4. Ein Verfahren nach irgendeinem der Ansprüche 1 bis 3, wobei das Copolymer vor dem Hydrieren die Struktur A-(A/B)-B aufweist, in welchem das Copolymer ein durchschnittliches Molekulargewicht (Zahlenmittel) im Bereich von 150000 bis 240000 aufweist, der Isoprengehalt 93 bis 97 Gewichtsprozent beträgt, der Gehalt an monoalkenylaromatischem Kohlenwasserstoff 7 bis 3 Gewichtsprozent beträgt, der Homopolymerblock A mindestens 75 Gewichtsprozent des Copolymers umfaßt, und B ein Homopolymerblock des monoalkenylaromatischen Kohlenwasserstoffs mit einem durchschnittlichen Molekulargewicht (Zahlenmittel) von mindestens 4000, vorzugsweise mindestens 6000, ist.

5. Ein Verfahren nach Anspruch 4, in welchem das Copolymer nach dem Hydrieren ein durchschnittliches Molekulargewicht (Zahlenmittel ) im Bereich von 190000 bis 210000 aufweist und der Gehalt an monoalkenylaromatischem Kohlenwasserstoff 6 bis 4 Gewichtsprozent beträgt.

6. Ein Verfahren nach einem der vorstehenden Ansprüche, in welchem der monoalkenylaromatische Kohlenwasserstoff Styrol ist.

7. Ein Verfahren nach einem der vorstehenden Ansprüche, in welchem mindestens 93% der Isopreneinheiten eine 1,4-Konfiguration haben.

8. Ein Verfahren nach einem der vorstehenden Ansprüche, in welchem mindestens 98% des Isoprens hydriert werden.

9. Ein Verfahren zur Herstellung einer Ölzusammensetzung, welches das Vermischen eines größeren Anteils eines Öls und eines kleineren Anteils eines polymeren Viskositätsindex-Verbesserungsmittels umfaßt, das nach einem Verfahren, wie in einem der Ansprüche 1 bis 8 beansprucht, hergestellt worden ist.

## Revendications (Revendications pour l'(les) Etat(s) contractant(s) suivant(s): BE, DE, FR, GB, IT, NL)

1. Un agent polymère améliorant l'indice de viscosité susceptible de finition au cyclone produit par le procédé comprenant les étapes selon lesquelles
(a) on prépare par polymérisation anionique un copolymère ayant un poids moléculaire moyen en nombre compris entre 125 000 et 275 000, une teneur en isoprène comprise entre 90 et 98 pour cent en poids, où au moins 85 % des mailles d'isoprène ont une configuration 1,4, et une teneur en hydrocarbure monoalcényl aromatique comprise entre 10 et 2 pour cent en poids et comprenant une structure séquencée A-A/B où A est un bloc d'homopolymère de l'isoprène et A/B est un bloc de copolymère de l'isoprène et de l'hydrocarbure monoalcényl aromatique; le bloc d'homopolymère A constituant au moins 60 % du copolymère en poids ; et
(b) on hydrogène au moins 95 %, de préférence au moins 98 % de l'isoprène et au moins 5 % de l'hydrocarbure monoalcényl aromatique.

2. Un agent améliorant l'indice de viscosité selon la revendication 1, dans lequel une proportion de 10 % à 30 % de l'hydrocarbure monoalcényl aromatique est hydrogénée.

3. Un agent améliorant l'indice de viscosité selon la revendication 1 ou la revendication 2, dans lequel, après hydrogénation, le bloc d'homopolymère A a un poids moléculaire moyen en nombre compris entre 90 000 et 225 000.

4. Un agent améliorant l'indice de viscosité selon l'une quelconque des revendications 1 à 3, dans lequel, avant hydrogénation, le copolymère a la structure A-(A/B)-B où le copolymère a un poids moléculaire moyen en nombre compris entre 150 000 et 240 000, la teneur en isoprène est comprise entre 93 et 97 pour cent en poids, la teneur en hydrocarbure monoalcényl aromatique est comprise entre 7 et 3 pour cent en poids, le bloc d'homopolymère A constitue au moins 75 % du copolymère en poids, et B est un bloc d'homopolymère de l'hydrocarbure monoalcényl aromatique ayant un poids moléculaire moyen en nombre d'au moins 4 000, de préférence d'au moins 6 000.

5. Un agent améliorant l'indice de viscosité selon la revendication 4, dans lequel, après hydrogénation, le copolymère a un poids moléculaire moyen en nombre compris entre 190 000 et 210 000 et la teneur en hydrocarbure monoalcényl aromatique est comprise entre 6 et 4 pour cent en poids.

6. Un agent améliorant l'indice de viscosité selon l'une quelconque des revendications précédentes, dans lequel l'hydrocarbure monoalcényl aromatique est du styrène.

7. Un agent améliorant l'indice de viscosité selon l'une quelconque des revendications précédentes, dans lequel au moins 93 % des mailles d'isoprène ont la configuration 1,4.

8. Un agent améliorant l'indice de viscosité selon l'une quelconque des revendications précédentes, dans lequel au moins 98 % de l'isoprène est hydrogéné.

9. Un procédé pour la préparation d'un agent polymère améliorant l'indice de viscosité susceptible de finition au cyclone selon l'une quelconque des revendications 1 à 8, comprenant les étapes selon lesquelles :
(a) on polymérise anioniquement du styrène et un hydrocarbure monoalcényl aromatique de manière à produire un copolymère ayant un poids moléculaire moyen en nombre compris entre 125 000 et 275 000, une teneur en isoprène comprise entre 90 et 98 pour cent en poids, où au moins 85 % des mailles d'isoprène ont une configuration 1,4, et une teneur en hydrocarbure monoalcényl aromatique comprise entre 10 et 2 pour cent en poids ; et comprenant une structure séquencée A-A/B où A est un bloc d'homopolymère de l'isoprène et A/B est un bloc de copolymère de l'isoprène et de l'hydrocarbure monoalcényl aromatique, le bloc d'homopolymère A constituant au moins 60 % du copolymère en poids ; et
(b) on hydrogène au moins 95 % de l'isoprène et au moins 5 % de l'hydrocarbure monoalcényl aromatique.

10. Une composition d'huile comprenant une proportion majeure d'une huile et une proportion mineure d'un agent polymère améliorant l'indice de viscosité selon l'une quelconque des revendications à 8.

## Revendications (Revendications pour l'(les) Etat(s) contractant(s) suivant(s): ES)

1. Un procédé pour la préparation d'un agent polymère améliorant l'indice de viscosité susceptible de finition au cyclone, comprenant les étapes selon lesquelles :
(a) on polymérise anioniquement de l'isoprène et un hydrocarbure monoalcényl aromatique de manière à produire un copolymère ayant un poids moléculaire moyen en nombre compris entre 125 000 et 275 000, une teneur en isoprène comprise entre 90 et 98 pour cent en poids, où au moins 85 % des mailles d'isoprène ont une configuration 1,4, et une teneur en hydrocarbure monoalcényl aromatique comprise entre 10 et 2 pour cent en poids ; et comprenant une structure séquencée A-A/B où A est un bloc d'homopolymère de l'isoprène et A/B est un bloc de copolymère de l'isoprène et de l'hydrocarbure monoalcényl aromatique, le bloc d'homopolymère A constituant au moins 60 % du copolymère, en poids ; et
(b) on hydrogène au moins 95 % de l'isoprène et au moins 5 % de l'hydrocarbure monoalcényl aromatique.

2. Un procédé selon la revendication 1, dans lequel une proportion de 10 % à 30 % de l'hydrocarbure monoalcényl aromatique est hydrogénée.

3. Un procédé selon la revendication 1 ou la revendication 2, dans lequel, après l'hydrogénation, le bloc d'homopolymère A a un poids moléculaire moyen en nombre compris entre 90 000 et 225 000.

4. Un procédé selon l'une quelconque des revendications 1 à 3, dans lequel, avant hydrogénation, le copolymère a la structure A-(A/B)-B où le copolymère a un poids moléculaire moyen en nombre compris entre 150 000 et 240 000, la teneur en isoprène est comprise entre 93 et 97 pour cent en poids, la teneur en hydrocarbure monoalcényl aromatique est comprise entre 7 et 3 pour cent en poids, le bloc d'homopolymère A constitue au moins 75 % du copolymère en poids, et B est un bloc d'homopolymère de l'hydrocarbure monoalcényl aromatique ayant un poids moléculaire moyen en nombre d'au moins 4 000, de préférence au moins 6 000.

5. Un procédé selon la revendication 4, dans lequel, après l'hydrogénation, le copolymère a un poids moléculaire moyen en nombre compris entre 190 000 et 210 000 et la teneur en hydrocarbure monoalcényl aromatique est comprise entre 6 et 4 pour cent en poids.

6. Un procédé selon l'une quelconque des revendications précédentes, dans lequel l'hydrocarbure monoalcényl aromatique est du styrène.

7. Un procédé selon l'une quelconque des revendications précédentes, dans lequel au moins 93 % demailles d'isoprène ont la configuration 1,4.

8. Un procédé selon l'une quelconque des revenditions précédentes, dans lequel au moins 98 % de l'isoprène est hydrogéné.

9. Un procédé pour la préparation d'une composition d'huile, selon lequel on mélange une proportion majeure d'une huile et une proportion mineure d'un agent polymère améliorant l'indice de viscosité préparé par un procédé selon l'une quelconque des revendications 1 à 8.
